# EUROPÄISCHE PATENTSCHRIFT

(11) **EP 1 346 859 B1**
(45) Veröffentlichungstag und Bekanntmachung des Hinweises auf die Patenterteilung: **29.11.2006**
(21) Anmeldenummer: 03006571.8
(22) Anmeldetag: 24.03.2003
(51) Int. Cl.: B60H 1/00

(54) **Steuereinrichtung für Heizungs- und/oder Klimaanlagen**
Control device for a heating and/or air conditioning unit
Dispositif de commande pour un appareil de chauffage et/ou de climatisation

(30) Priorität: 23.03.2002 DE 10213177
(43) Veröffentlichungstag der Anmeldung: 24.09.2003
(73) Patentinhaber: Behr GmbH & Co. KG, 70469 Stuttgart (DE)
(72) Erfinder: Klingler, Dietrich, 73540 Heubach (DE); Schwahn, Werner, 71701 Schwieberdingen (DE)
(74) Vertreter: Grauel, Andreas

(56) Entgegenhaltungen:
- FR-A- 2 580 791
- GB-A- 2 324 600
- US-A- 5 160 115
- US-A- 5 906 355
- US-A- 5 916 021
- PATENT ABSTRACTS OF JAPAN vol. 013, no. 296 (M-846), 10. Juli 1989 (1989-07-10) & JP 01 085809 A (NIPPON DENSO CO LTD), 30. März 1989 (1989-03-30)

## Beschreibung

Die Erfindung betrifft eine Steuereinrichtung zum Steuern von Luftströmen insbesondere in Heizungs- und/oder Klimaanlagen von Kraftfahrzeugen insbesondere nach dem Oberbegriff des Patentanspruches 1.

In der US 5916021 ist eine Vorrichtung zur Steuerung eines Luftstroms in einem Fahrzeug offenbart. Die Vorrichtung ist mit einer Folie mit offenen und geschlossenen Bereichen versehen, die in Schlitzen an zwei sich gegenüberliegenden Rollen befestigt wird. Durch Auf- und Abwickeln auf den Rollen, wird die Folie vor einer Öffnung hin und herbewegt und steuert den Querschnitt einer Luftströmungsöffnung. Die Öffnung wird durch einen Bandabschnitt geschlossen und geöffnet.

Die DE 44 42 000 offenbart eine so genannte Jalousiekassette, die in Luftkanäle einer Heizungs- und/oder Klimaanlage für ein Kraftfahrzeug eingesetzt wird, und zwar zur Regelung der Menge und auch der Richtung des durchtretenden Luftstromes. Die Kassette wird durch einen Rahmen gebildet, in dem eine Vielzahl von schwenkbaren Lamellen angeordnet ist, die eine Klappenjalousie bilden. Durch Verschwenken der Lamellen in einem Bereich von 0 bis 90° kann der Durchtrittsquerschnitt für den Luftstrom vollständig geschlossen, vollständig geöffnet oder teilweise frei gegeben werden, wobei auch die Richtung des Luftstromes durch die Stellung der Lamellen beeinflusst wird. Diese Jalousiekassette weist eine Vielzahl von Teilen auf, bedingt durch die Lamellenbauart und die damit verbundene Ansteuerung. Bei engen Luftspalten können Pfeifgeräusche auftreten und möglicherweise auch Klappergeräusche. Darüber hinaus weist eine solche Jalousiekassette einen relativ hohen Luftwiderstand, d. h. Druckabfall auf.

In der DE 35 14 358 A1 wurde bereits vorgeschlagen, herkömmliche Klappen zu Steuerung der Luftströme in einer Heizungs- und/oder Klimaanlage durch eine so genannte Rolljalousie zu ersetzen. Letztere besteht aus einem Rollband, welches teilweise mit Ausschnitten versehen ist und die Durchtrittsöffnungen von Luftströmungskanälen schließt oder teilweise bzw. vollständig frei gibt. Das Rollband wird über einzelne Walzen geführt, auf- und abgewickelt sowie mittels eines Stellmotors über eine Antriebswalze in Schließ-, Öffnungs- oder Zwischenstellung gebracht.

Eine Weiterentwicklung einer solchen Rolljalousie wurde durch die EP 0 705 725 A1 bekannt. Dort wird ein filmartiges Rollband, welches, über seine Länge verteilt, eine Vielzahl von unterschiedlichen Ausschnitten für den Durchtritt eines Luftstromes aufweist, an den Austrittsöffnungen des Klimaanlagengehäuses vorbei geführt und kontrolliert somit den Austrittsquerschnitt für die Luft. In einer weiteren Anwendung ist ein solches Rollband unmittelbar vor dem Heizkörper angeordnet und steuert die durch den Heizkörper hindurchtretende Luftmenge sowie den den Heizkörper umströmenden Bypassstrom. Diese Art von Rolljalousien ist jeweils an die speziellen Einbauverhältnisse und Konfigurationen einer speziellen Heizungs- und/oder Klimaanlage angepasst.

Es ist Aufgabe der vorliegenden Erfindung, eine Steuereinrichtung zum Steuern von Luftströmen der eingangs genannten Art dahingehend zu verbessern, dass sie unerwünschte Geräuschen möglichst mindert, einen geringeren Luftwiderstand aufweist sowie einen geringen Bauraum benötigt und einfach in eine Heizungs- und/oder Klimaanlage einbaubar ist.

Die Lösung dieser Aufgabe ergibt sich aus den Merkmalen des Patentanspruches 1.

Die Steuereinrichtung ist vorteilhaft als eine Baueinheit mit einer Rolljalousie ausgebildet. Dabei kann die Steuereinrichtung von der Mitte ausgehend öffnen und schließen. In einem anderen Ausführungsbeispiel kann auch von einer Seite aus geöffnet und geschlossen werden.

Dadurch ergibt sich, in Luftströmungsrichtung gesehen, eine kleine Bautiefe sowie ein geringer Druckabfall. Die Steuereinheit ist als Kassette ausgebildet, die in einer Klimaanlage vielseitig verwendbar ist, da sie einzeln oder in Kombination mit weitern Kassetten an verschiedenen Stellen zur Kontrolle der Luftströme eingesetzt werden kann.

In einer vorteilhaften Weiterbildung der Erfindung besteht die Kassette aus einem Gehäuse mit Antriebs- und Umlenkwelle, über welche eine als endloses Rollband ausgebildete Rolljalousie geführt ist. Der Transport des Rollbands erfolgt über eine randseitige Perforation im Rollband und eine Verzahnung auf der Antriebswelle oder eine direkte Befestigung des Bandes durch kleben, schweißen, klemmen, auf der Antriebswelle. Dadurch ergibt sich ein schlupffreier Transport des Rollbandes und damit eine exakte Einstellung des gewünschten Durchtrittsquerschnittes für den Luftstrom.

Nach einer weiteren vorteilhaften Ausgestaltung der Erfindung weist das Gehäuse längsseitig geschlitzte hohlzylindrische Bereiche auf, die Antriebs- und Umlenkwelle aufnehmen. Die Wand des Hohlzylinders endet in einer elastischen Zunge, die sich mit einem Radius an das Rollband anlegt und somit als Spannelement wirkt. Dadurch kann man auf eine Spannrolle verzichten.

In weiterer Ausbildung der Erfindung ist das Gehäuse aus wenigen Kunststoffteilen zusammengesetzt, die durch Verclipsung einfach montiert und zusammen gehalten werden. Insofern sind auch die Herstellkosten gering.

Nach einer vorteilhaften Ausgestaltung der Erfindung erfolgt der Antrieb über einen angeflanschten Stellmotor, der durch Drehung der Antriebswelle den gewünschten Durchtrittsquerschnitt einstellt.

In vorteilhafter Weiterbildung kann die Antriebswelle auch als Hohlwelle ausgebildet sein, womit sich die Möglichkeit ergibt, den Stellmotor zumindest teilweise in die Antriebswelle zu integrieren. Damit kann die Kassette mit Rolljalousie und Antrieb als komplette Baueinheit für den Einbau in eine Heizungs- und/oder Klimaanlage geliefert werden. Vorzugsweise kann die Einheit von Motor und Getriebe über einen Verschluß, wie z.B. Bajonettverschluß, austauschbar gestaltet sein.

Vorteilhafte Weiterbildungen der Erfindung ergeben sich aus den Unteransprüchen.

Die Erfindung wird anhand von Ausführungsbeispielen in den Zeichnungen näher dargestellt und werden im Folgenden näher beschrieben. Es zeigen
- Fig. 1: eine Kassette mit Rolljalousie,
- Fig. 2: die Kassette mit Rolljalousie in vormontiertem Zustand,
- Fig. 3: die Kassette mit Rolljalousie und angeflanschtem Stellmotor,
- Fig. 4: einen vergrößerten Ausschnitt von Antriebswelle und Rollband und
- Fig. 5: das Rollband als Endlosband.

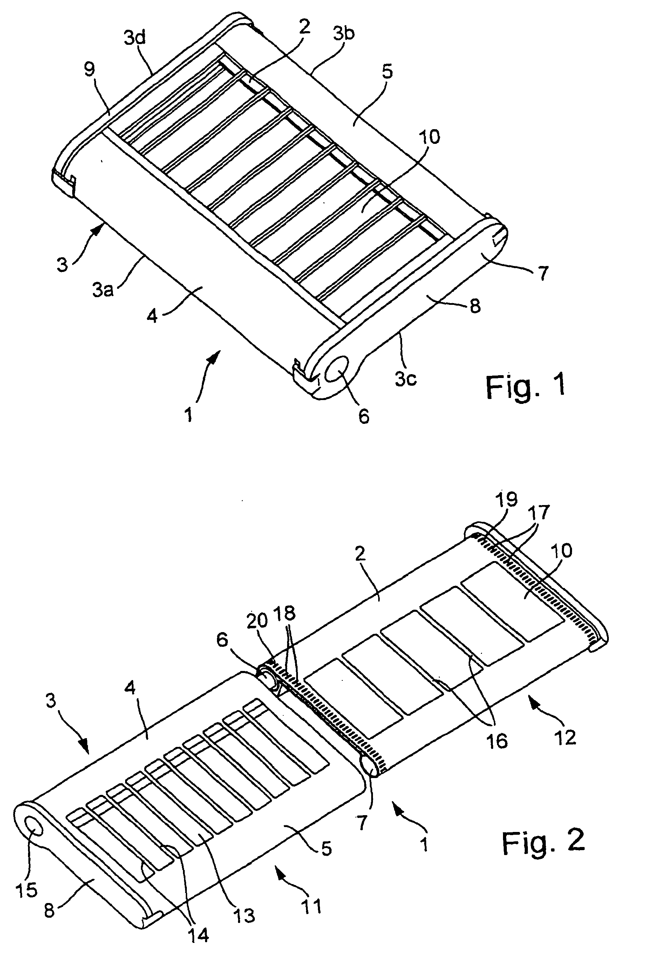

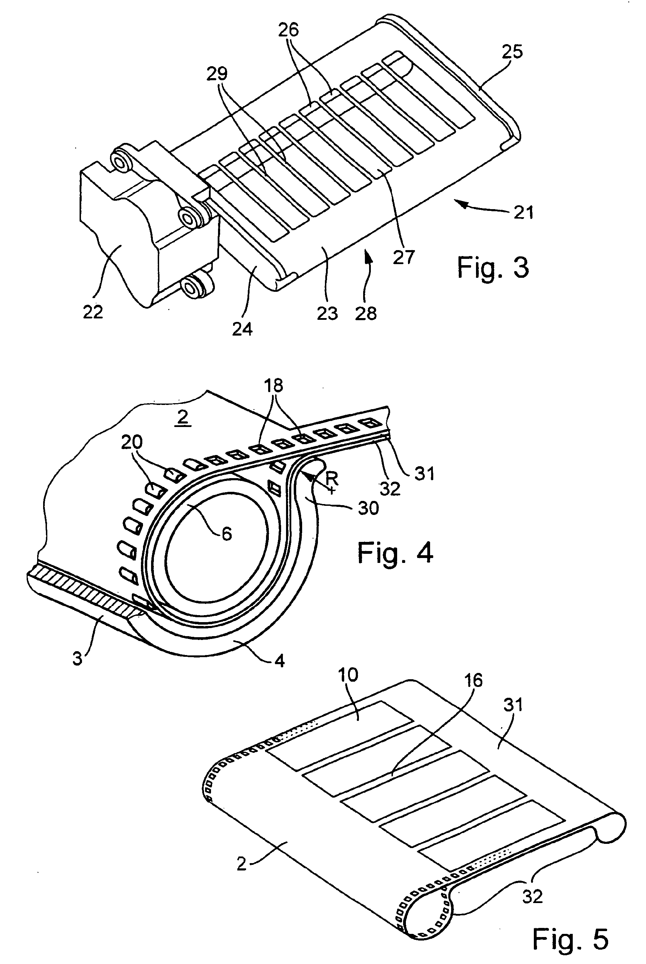

Fig. 1 zeigt eine als Baueinheit ausgebildete Kassette 1 mit einer Rolljalousie 2, die als endloses Rollband ausgebildet ist. Eine solche Kassette wird in eine hier nicht dargestellte Heizungs- und/oder Klimaanlage für ein Kraftfahrzeug eingesetzt, wobei die Kassette hinsichtlich ihrer Außenabmessungen an den jeweiligen Luftströmungskanal angepasst ist, so dass der gesamte Luftströmungsquerschnitt durch die Kassette kontrolliert werden kann. Prinzipiell besteht die Kassette 1 aus einem Gehäuse 3, welches einen etwa rechteckförmigen Grundriss mit zwei Längsseiten 3a, 3b und zwei Schmalseiten 3c, 3d aufweist. An den Längsseiten 3a, 3b weist das Gehäuse 3 jeweils die Form eines geschlitzten Hohlzylinders 4, 5 auf, innerhalb welcher eine Antriebswelle 6 bzw. eine Umlenkwelle 7 aufgenommen sind. Eine genauere Darstellung des Hohlzylinders 4 zeigt Fig. 4. Das Gehäuse 3 wird an seinen Schmalseiten 3c, 3d durch Seitenteile 8, 9 abgeschlossen. Die Antriebswelle 6 und die Umlenkwelle 7 sind mit nicht näher dargestellten stirnseitigen Zapfen oder Hohlzapfen in entsprechenden Lagerstellen der Seitenteile 8, 9 drehbar gelagert. Über den Umfang der Antriebswelle 6 und der Umlenkwelle 7 ist das Rollband 2 geführt; es weist einen Ausschnitt 10 auf, der einen rechteckförmigen Querschnitt zwischen den Längs- und Schmalseiten 3a, 3b, 3c, 3d freigibt, und zwar durch gegenläufige Bewegung der Bandabschnitte des endlosen Rollbandes 2, siehe auch die Beschreibung zu Fig. 4 und Fig.5.

Fig. 2 zeigt die Kassette 1 gemäß Fig. 1 in einem vormontierten Zustand, d. h. in zwei vormontierten Baugruppen 11 und 12. Die erste Baugruppe 11 besteht aus dem Gehäuse 3 mit den beiden hohlzylindrischen Randbereichen 4 und 5 sowie aus dem angeclipsten Seitenteil 8. Das Gehäuse 3 weist ein Fenster 13 (Durchtrittsquerschnitt) auf, welches durch dünne Gitterstäbe 14 unterteilt ist. Diese parallel angeordneten Gitterstäbe 14 dienen der Festigkeit des Gehäuses 3 und auch der Ausrichtung der durchtretenden Luftströmung. Im Seitenteil 8 ist als Lagerstelle für die Antriebsstelle 6 eine Aufnahmeöffnung 15 vorgesehen.

Die zweite Baugruppe 12 besteht aus dem zweiten Seitenteil 9 sowie der Antriebswelle 6 und der Umlenkwelle 7; beide sind in nicht näher dargestellter Weise endseitig mittels Zapfen in entsprechenden Öffnungen des Seitenteils 9 gelagert. Über beide Wellen 6 und 7 ist die Rolljalousie 2 geführt, die einen Ausschnitt 10 aufweist, der hinsichtlich seines Querschnittes dem des Fensters 13 in dem Gehäuse 3 entspricht. Der Ausschnitt 10 ist durch einzelne schmale Streifen 16 unterteilt, damit in dem Rollband 2 die erforderliche Zugspannung über die gesamte Breite aufrechterhalten und eine dichte Anlage des Rollbandes 2 an die beiden Wellen 6 und 7 gewährleistet ist. Randseitig weist das Rollband 2 eine Perforation 17, 18 auf, in welche jeweils eine Verahnung 19, 20 der Antriebswelle 6 eingreift.

Beide Baugruppen 11 und 12 werden in der Weise zusammengebaut, in dem die in der Zeichnung rechts angeordnete Baugruppe 12 in die linke Baugruppe 11, d. h. in das Gehäuse 3 in Richtung der beiden Wellenachsen eingeführt wird, bis die Enden der Antriebswelle 6 und der Umlenkwelle 7 in der Aufnahmeöffnung 15 des Seitenteils 8 bzw. von einem nicht dargestellten Lager im Seitenteil 8 aufgenommen sind. Das Seitenteil 9 wird dann mit dem Gehäuse 3 verclipst, womit die Kassette fertig montiert ist.

Fig. 3 zeigt ein weiteres Ausführungsbeispiel der Erfindung, und zwar eine Kassette 21 mit einem angeflanschten Stellmotor 22. Die Kassette ist bezüglich ihres Gehäuses 23 und der beiden Seitenteile 24, 25 ähnlich wie die vorherigen Ausführungsbeispiele aufgebaut. Das Rollband 26 ist, da das Fenster 27 fast vollständig geöffnet ist, nur durch einen schmalen Streifen zu erkennen. Das Rollband 26 liegt also innerhalb des Gehäuses 23. Die Luftströmungsrichtung ist durch einen Pfeil 28 angedeutet, d. h. die Luft drückt das Rollband 26 von innen gegen das Gehäuse 23 bzw. deren Gitterstäbe 29. Der Stellmotor 22 ist vorzugsweise als Getriebemotor oder als so genannter Flachantrieb ausgebildet, dessen nicht dargestellte Abtriebsachse koaxial zur hier nicht sichtbaren Achse der Antriebswelle für das Rollband 26 verläuft. Die Befestigung des Stellmotors 22 erfolgt vorzugsweise über das Seitenteil 24. Somit liegt eine komplette Baueinheit als Kassette mit Rolljalousie und Stellmotor vor, welche auf einfache Weise in das Gehäuse einer Heizungs- und/oder Klimaanlage eingesetzt werden kann.

Fig. 4 zeigt einen vergrößerten Ausschnitt des Rollbandes 2 im Bereich der Antriebswelle 6 entsprechend der Darstellung in Fig. 2, wobei weitestgehend die gleichen Bezugsziffern verwendet werden. Die Antriebswelle 6, die gestrichelt dargestellt ist, befindet sich in dem hohlzylindrischen Bereich 4 des Gehäuses 3, wobei dieser Holzylinder 4 nicht geschlossen, sondern in Richtung Gehäusemitte offen ist. Die Wandung des Hohlzylinders 4 läuft in eine federnd ausgebildete Zunge 30 mit einem Radius R aus, oberhalb welcher das Rollband 2 in den hohlzylindrischen Bereich 4 eingeführt und wieder hinausgeführt wird. Das endlose Rollband 2 weist eine obere Lage 31 und eine untere Lage 32 auf, die sich gegenläufig zueinander bewegen. Das Rollband 2 umschlingt ca. ¾ des Umfanges der Antriebswelle 6 und wird durch die federnde Zunge 30 gespannt. Die Zunge 30 ersetzt somit eine Spannrolle. Auf dem Umfang der Antriebswelle 6 ist eine noppenförmige Verzahnung 20 vorgesehen, die in eine entsprechende Perforation 18 im Randbereich des Rollbandes 2 eingreift.

Fig. 5 zeigt das Rollband 2 als endloses Band, d. h. mit der oberen Lage 31 und der unteren Lage 32, die ineinander übergehen und somit eine geschlossene Schlaufe bilden.

Statt der oben beschriebenen noppenartigen Verzahnung 20 auf der Antriebswelle 6 in Verbindung mit der Perforation 18 des Rollbandes 2 kann das Rollband 2 auch mit seinen beiden Enden an der Antriebswelle 6 befestigt sein, indem die Rollbandenden entweder in einen in Längsrichtung verlaufenden Schlitz eingeklemmt oder in Längsrichtung der Antriebswelle 6 mit dieser verschweißt werden. Der Verstellweg für das Rollband ist dann vom Umfang der Antriebswelle bzw. vom Umschlingungswinkel abhängig.

## Patentansprüche

1. Steuereinrichtung (1,21) zum Steuern von Luftströmen in Heizungs- und/oder Klimaanlagen von Kraftfahrzeugen, bestehend aus einem Rahmen (3), der in die Heizungs- und/oder Klimaanlage einsetzbar ist und Steuermittel (2) zum Verändem des Durchtrittsquerschnittes (13,27) für die Luftströmung innerhalb des Rahmens (3) aufweist, wobei die Steuermittel (2) als Rolljalousie (2) ausgebildet sind, **dadurch gekennzeichnet, dass** der Durchtrittsquerschnitt (13,27) durch gegenläufige Bewegung von parallel zueinander angeordneten Bandabschnitten (10) der Rolljalousie (2) veränderbar ist.

2. Steuereinrichtung nach Anspruch 1, **dadurch gekennzeichnet, dass** der Rahmen (3) als Kassette (1,21) mit einer Antriebs- und einer Umlenkwelle (6, 7) ausgebildet ist, über welche die Rolljalousie (2) geführt ist

3. Steuereinrichtung nach Anspruch 1 oder 2, **dadurch gekennzeichnet, dass** die Rolljalousie (2) als endloses Rollband (2) mit Aussparungen (10) zur Freigabe des Durchtrittsquerschnittes (13,27) ausgebildet ist.

4. Steuermittel nach Anspruch 2, **dadurch gekennzeichnet, dass** die Antriebswelle (6) stimseitig Verzahnungen (20) aufweist, die in Perforationen (18) des Rollbandes (2) eingreifen.

5. Steuereinrichtung nach Anspruch 2, 3 oder 4, **dadurch gekennzeichnet, dass** der Rahmen (3) aus einem Gehäuse (3,23) mit längsseitig offenen hohlzylindrischen Bereichen (4,5) besteht, welche die Antriebs- und die Umlenkwelle mit Rolljalousie (6,7) in sich aufnehmen und seitlich durch je ein Seitenteil (8,9,24,25) abgeschlossen sind.

6. Steuereinrichtung nach Anspruch 5, **dadurch gekennzeichnet, dass** der hohlzylindrische Bereich (4,5) des Gehäuses (3,23) eine elastisch ausgebildete Zunge (30) aufweist, die als Spannelement für das Rollband (2) ausgebildet ist.

7. Steuereinrichtung nach Anspruch 5 oder 6 **dadurch gekennzeichnet, dass** das Gehäuse (3,23), die Seitenteile (8,9,24,25), die Antriebs- und die Umlenkwelle (6,7) als Kunststoffteile ausgebildet und miteinander durch Clipsverbindungen zu einer Baueinheit verbunden sind.

8. Steuereinrichtung nach Anspruch 5, 6 oder 7, **dadurch gekennzeichnet, dass** das Gehäuse (3,23) einen freien Durchtrittsquerschnitt (13,27) aufweist, der durch Gitterstäbe (14,29) unterteilt ist.

9. Steuereinrichtung nach einem der Ansprüche 2 bis 8, **dadurch gekennzeichnet, dass** an den Rahmen (3) ein Stellmotor (22) zum Verstellen der Antriebswelle (6) angeflanscht ist.

10. Steuereinrichtung nach Anspruch 9, **dadurch gekennzeichnet, dass** der Stellmotor (32) koaxial zur Antriebswelle (6) angeordnet ist.

11. Steuereinrichtung nach Anspruch 10, **dadurch gekennzeichnet, dass** der Stellmotor (22) in die als Hohlwelle ausgebildete Antriebswelle (6) integriert ist.

## Claims

1. A control device (1, 21) for controlling air flows in heating and/or air conditioning units of motor vehicles consisting of a frame (3) which can be inserted into the heating and/or air conditioning unit and control means (2) for changing the average cross-section (13, 27) for the air flow within the frame, the control means (2) being designed as a roller blind,
**characterised in that**
the average cross-section (13, 27) can be changed by moving strip sections (10) of the roller blind (2) in opposite directions, said strip sections (10) being positioned parallel to one another.

2. A control device in accordance with claim 1,
**characterised in that**
the frame (3) is designed as a cassette (1, 21) with a drive and an idle shaft (6, 7) over which the roller blind (2) runs.

3. A control device in accordance with claim 1 or 2,
**characterised in that**
the roller blind (2) is designed as an endless roller strip (2) with openings (10) for releasing the average cross section (13, 27).

4. A control device in accordance with claim 2,
**characterised in that**
the drive shaft (6) has teeth on its front face which engage in perforations (18) in the roller strip (2).

5. A control device in accordance with claim 2 or 3 or 4,
**characterised in that**
the frame (3) consists of a housing (3, 23) with hollow cylindrical areas (4, 5) open along the sides which receive the drive and idle shafts complete with roller blind (6, 7) and are closed by a lateral part (8, 9, 24, 25) one each side.

6. A control device in accordance with claim 5,
**characterised in that**
the hollow cylindrical area (4, 5) of the housing (3, 23) has an elastically formed tongue (30) which is designed as a tensioning element for the roller strip (2).

7. A control device in accordance with claim 5 or 6,
**characterised in that**
the housing (3, 23), the lateral parts (8, 9, 24, 25) and the drive and idle shafts (6, 7) are designed as plastic parts and are connected together by clip connectors to form a modular unit.

8. A control device in accordance with claim 5, 6 or 7,
**characterised in that**
the housing (3, 23) has a free average cross-section (13, 27) which is divided into sections by means of lattice cross-pieces (14, 29).

9. A control device in accordance with one of claims 2 to 8,
**characterised in that**
a servomotor (22) for adjusting the drive shaft (6) is flanged to the frame (3).

10. A control device in accordance with claim 9,
**characterised in that**
the servomotor (22) is positioned coaxially in relation to the drive shaft (6).

11. A control device in accordance with claim 10,
**characterised in that**
the servomotor (22) in integrated in the drive shaft (6) which is designed as a hollow shaft.

## Revendications

1. Dispositif de commande (1, 21) servant à réguler des flux d'air dans des systèmes de chauffage et/ou de climatisation de véhicules automobiles, se composant d'un cadre (3) qui peut être monté dans le système de chauffage et/ou de climatisation et présente un moyen de commande (2) servant à modifier la section de passage (13, 27) pour le flux d'air à l'intérieur du cadre (3), où le moyen de commande (2) est conçu comme une jalousie enroulable (2),
**caractérisé en ce que** la section de passage (13, 27) peut être modifiée par un mouvement en sens inverse de parties de bandes (10) de la jalousie enroulable (2), disposées en étant parallèles entre elles.

2. Dispositif de commande selon la revendication 1, **caractérisé en ce que** le cadre (3) est conçu comme une cassette (1, 21) comprenant un arbre d'entraînement et un arbre de renvoi (6, 7) par lesquels est guidée la jalousie enroulable (2).

3. Dispositif de commande selon la revendication 1 ou 2, **caractérisé en ce que** la jalousie enroulable (2) est conçue comme une bande enroulable sans fin (2) comprenant des évidements (10) servant à dégager la section de passage (13, 27).

4. Moyens de commande selon la revendication 2, **caractérisés en ce que** l'arbre d'entraînement (6) présente, côté frontal, des dentures (20) qui s'engagent dans des perforations (18) de la bande enroulable (2).

5. Dispositif de commande selon les revendications 2, 3 ou 4, **caractérisé en ce que** le cadre (3) se compose d'un boîtier (3, 23) comprenant, sur le grand côté, des zones (4, 5) cylindriques creuses et ouvertes qui logent l'arbre d'entraînement et l'arbre de renvoi (6, 7) ainsi que la jalousie enroulable et sont fermées à chaque fois, latéralement, par une partie latérale (8, 9, 24, 25).

6. Dispositif de commande selon la revendication 5, **caractérisé en ce que** la zone cylindrique creuse (4, 5) du boîtier (3, 23) présente une languette (30) configurée de façon élastique qui est conçue comme un élément de serrage pour la bande enroulable (2).

7. Dispositif de commande selon la revendication 5 ou 6, **caractérisé en ce que** le boîtier (3, 23), les parties latérales (8, 9, 24, 25), l'arbre d'entraînement et l'arbre de renvoi (6, 7) sont conçus comme des pièces en matière plastique, et reliés les uns aux autres par des assemblages clipsés pour former un ensemble unitaire.

8. Dispositif de commande selon les revendications 5, 6 ou 7, **caractérisé en ce que** le boîtier (3, 23) présente une section de passage libre (13, 27) qui est subdivisée par des barres en treillis (14, 29).

9. Dispositif de commande selon l'une quelconque des revendications 2 à 8, **caractérisé en ce qu'**un moteur de commande (22) servant au réglage de l'arbre d'entraînement (6) est fixé par brides sur le cadre (3).

10. Dispositif de commande selon la revendication 9, **caractérisé en ce que** le moteur de commande (22) est disposé de façon coaxiale par rapport à l'arbre d'entraînement (6).

11. Dispositif de commande selon la revendication 10, **caractérisé en ce que** le moteur de commande (22) est intégré à l'arbre d'entraînement (6) conçu comme un arbre creux.
